## Europäisches Patentamt
## European Patent Office
## Office européen des brevets

(19)

(11) Veröffentlichungsnummer: **0 121 805**
**B1**

(12) **EUROPÄISCHE PATENTSCHRIFT**

(45) Veröffentlichungstag der Patentschrift: **08.08.90**

(51) Int. Cl.⁵: **H 04 L 7/00**

(21) Anmeldenummer: **84102685.9**

(22) Anmeldetag: **12.03.84**

(54) Synchronisation nachziehbarer Taktoszillatoren bei der Übertragung digitaler Signale.

(30) Priorität: **15.03.83 DE 3309270**

(43) Veröffentlichungstag der Anmeldung:
**17.10.84 Patentblatt 84/42**

(45) Bekanntmachung des Hinweises auf die
Patenterteilung:
**08.08.90 Patentblatt 90/32**

(84) Benannte Vertragsstaaten:
**AT BE CH DE FR GB IT LI NL**

(56) Entgegenhaltungen:
**DE-B-2 824 137**
**US-A-3 983 498**
**US-A-4 135 166**

(73) Patentinhaber: **Siemens Aktiengesellschaft**
**Wittelsbacherplatz 2**
**D-8000 München 2 (DE)**

(72) Erfinder: **Gegner, Peter, Ing. Grad.**
**Werdenfelsstrasse 69**
**D-8000 München 70 (DE)**
Erfinder: **Vollnhals, Friedemann, Dipl.-Ing.**
**Mühlpointweg 10**
**D-8190 Wolfratshausen (DE)**

EP 0 121 805 B1

Courier Press, Leamington Spa, England.

## Beschreibung

Die Erfindung betrifft ein Verfahren zur Synchronisation von Taktgeneratoren bei der Übertragung digitaler Signale, die eine Taktinformation und periodisch wenigstens ein Synchronwort enthalten, bei dem aus den digitalen Signalen ein erstes, gegenüber diesen Signalen phasenstarres Taktsignal und daraus mittels einer, einen Phasenvergleicher und einen damit verbundenen spannungsgesteuerten Oszillator enthaltenden Phasenregelschleife, ein zweites Taktsignal erzeugt wird und bei dem die Erzeugung des ersten Taktsignals und der Empfang des Synchronwortes überwacht werden.

Die Übertragung digitaler Signale erfordert in bestimmten räumlichen Abständen oder an digitalen Schnittstellen eine Amplituden- und eine zeitmäßige Regenerierung der Signalimpulse. Zur zeitmäßigen Regenerierung wird dabei ein Taktsignal benötigt, das nach Frequenz und Phase dem sendeseitig verwendeten Taktsignal entspricht. Hierzu wird unter der Voraussetzung einer kontinuierlichen Signalübertragung das benötigte Taktsignal entweder parallel zum digitalen Signal auf einer eigenen Leitung zur Empfangsstelle übertragen oder aber das digitale Signal so codiert; daß es eine Taktinformation mitenthält. Die Taktinformation kann dabei in Energieanteilen bei einer Frequenz entsprechend der Taktfrequenz der digitalen Signale liegen, es können auch Energieanteile beispielsweise bei der doppelten Taktfrequenz auftreten, aus denen empfangsseitig ein Taktsignal erzeugt werden kann. Die Erzeugung des Taktsignals kann mittels eines Schwingkreises erfolgen, der auf die entsprechende Frequenz abgestimmt ist, es kann auch ein in einer Phasenregelschleife enthaltener nachziehbarer Taktoszillator verwendet werden. Dabei wird einem in der Phasenregelschleife enthaltenen Phasenvergleicher einerseits ein aus den übertragenen digitalen Signalen erzeugtes erstes Taktsignal und andererseits das örtlich erzeugte zweite Taktsignal zugeführt und mittels einer der Phasendifferenz beider Signale entsprechenden Spannung der örtliche Taktoszillator nachgezogen. Zur zeitlichen Regenerierung der digitalen Signale wird das örtlich erzeugte Taktsignal verwendet, so daß die regenerierten Signale praktisch jitterfrei sind und die Übertragung der digitalen Signale insgesamt in hohem Maße störunempfindlich ist. Wegen der geringen Bandbreite der Phasenregelschleife ergibt sich dabei jedoch eine lange Synchronisierzeit, die insbesondere bei einer Vielzahl von Zwischenregeneratoren innerhalb der Übertragungsstrecke zu einer sehr langen Synchronisierzeit führt. Es kann zwei auch unter Verzicht auf einen nachziehbaren Taktoszillator das aus den übertragenen Signalen gewonnene erste Taktsignal zur zeitlichen Regenerierung benützt werden, sodaß die Synchronisationszeit gering ist, das erste Taktsignal und damit auch die regenerierten Signale weisen jedoch einen hohen Phasenjitter auf, der sich über die Strecke akkumulieren und zu Übertragungsstörungen führen kann.

Die örtliche Erzeugung eines Taktsignals für die Regenerierung mittels eines nachziehbaren Taktoszillators wird in der Praxis sehr häufig verwendet, da die Übertragungsstrecken für digitale Signale üblicherweise ständig in Betrieb gehalten werden und bei einer sehr kleinen Fehlerrate neben der Anfangssynchronisierung eine Neusynchronisierung nur selten erforderlich ist. Schwierigkeiten können sich jedoch ergeben, wenn die digitale Übertragungsstrecke häufiger Störungen ausgesetzt ist oder wenn die Neusynchronisierzeit für die Gesamtfunktion eine wesentliche Rolle spielt. Dies ist der Fall bei adressenlosen Betriebsüberwachungssystem für digitale Weitverkehrsstrecken; ein derartiges Betriebsüberwachungssystem ist in der DE—OS 3027755 beschrieben. Bei diesem Überwachungssystem wird über das Übertragungskabel für das digitale Nutzsignal ein Teilemetriesignal mitübertragen, dabei ist jedem Leitungsendgerät und jedem Zwischenregenerator für das digitale Nutzsignal eine zusätzliche Telemetrieeinrichtung mit Telemetriesignalregenerator und Telemetriesignalsender beigeordnet. Die Telementriesignalübertragung beginnt damit, daß die Telemetrieeinrichtung im sendenden Leitungsendgerät zyklisch ein erstes Telegramm mit nachfolgendem Schlußzeichen aussendet. Im ungestörten Betrieb regeneriert jede Telemetrieeinrichtung der nachfolgenden Zwischenregeneratoren jedes empfangene Telegramm mit Schlußzeichen und hängt zusätzlich an das Ende des letzten empfangenen Telegramms das eigene Telegramm mit Schlußzeichen an. Auf diese Weise entsteht auf dem Weg von Telemetrieeinheit zu Telemetrieeinheit eine Telegrammkette, die zusätzlich zum Telegramm des sendenden Leitungsendgerätes von jeder Telementrieeinheit der Überwachungsstrecke ein Telegramm enthält. Die Auswertung der Telegramme erfolgt in einem abschließenden Ortungsgerät.

Im Hinblick auf Störungsmeldungen ist jede Telementrieeinheit so ausgebildet, daß die Ausfall des Empfangs von Telegrammen nach einer bestimmten Wartezeit diese Telemetrieeinheit von sich aus mit der zyklischen Aussendung des eigenen Telegramms mit nachfolgendem Schlußzeichen beginnt, die Aussendung aber sofort wieder eingestellt, sobald wieder Telegramme empfangen werden. Für die Regenerierung der digitalen Telegramme und für die Steuerung der Aussendung des eigenen Telegramms enthält jede Telemetrieeinheit einen nachziehbaren Taktoszillator, der im ungestörten Betrieb auf den Takt der Telementrieeinheit im sendenden Leitungsendgerät synchronisiert ist.

Im Störungsfall, also beispielsweise bei einer Betriebsunterbrechung in einem Zwischenregenerator, starten nach Ablauf der Wartezeit alle Telemetrieeinheiten mit der Aussendung des eigenen Telegramms. Dadurch empfangen aber bis auf die Telemetrieeinheit nach der gestörten Stelle alle anderen Telemetrieeinheiten wieder Telegramme, stellen die Aussendung des eigenen Telegramms ein und synchronisieren sich auf den Taktoszillator des Vorgängers. Da dies aber zur selben Zeit auch beim Vorgänger geschehen kann, kommt es zu einer Reihe von Synchronisierungsvorgängen, bis sich schließlich die einzelnen Telemetrieeinheiten der Reihe nach auf den Takt der ersten Telemetrieeinheit nach der Störungsstelle x synchronisiert haben. Als Synchronisierzeit der Reststrecke ergibt sich damit die Summe aus einer Wartezeit und der Anzahl der Telemetrieeinheiten der Reststrecke multipliziert mit dem Zykluszeit, die in der Praxis etwas größer als die Synchronisierzeit eines einzelnen Taktoszillators ist.

Im ungünstigsten Fall erfolgt die Störung im Anschluß an das sendende Leitungsendgerät, so daß sich beispielsweise bei einer Übertragungsstrecke mit 312 Zwischenregeneratoren bei einer Zykluszeit von 6,8 Sekunden und einer Wartezeit von 14 Sekunden die Synchronisationszeit der Reststrecke zu etwa 35 Minuten ergibt. Erst danach ist das Ortungsgerät in der Lage, durch Vergleich der Telegrammanzahl der Reststrecke mit der vorgegebenen Sollzahl den Störungssort anzugeben und gezielt zu alarmieren. Damit wäre aber eine derartige Betriebsüberwachung für digitale Weitverkehrssysteme mit hohen Bitraten nicht tragbar.

Die Aufgabe bei der vorliegenden Erfindung besteht also darin, eine Möglichkeit zur bitschnellen Anfangssynchronisation und Neusynchronisation nachziebarer Taktoszillatoren anzugeben, wie sie für die Übertragung digitaler Signale mit Synchrontakt verwendet werden.

Erfindungsgemäß wird die Aufgabe dadurch gelöst, daß in der Phasenregelschleife ein drittes Taktsignal mit einer Frequenz entsprechend einem Vielfachen der Taktfrequenz der digitalen Signale erzeugt wird, daß aus dem dritten Taktsignal durch Frequenzeilung das zweite Taktsignal gebildet wird und dieses die Erkennung des Synchronwortes steuert, daß bei einer Störung, die zu einem Ausfall des ersten Taktgnals und/oder des Synchronwortes führt, die Phasenregelschleife zwischen Phasenvergleicher und spannungsgesteuertem Oszillator aufgetrennt wird und die Steuerung des Synchronworterkennung von zweiten Taktsignal auf das erste Taktsignal umgeschaltet wird, daß nach Beseitigung der Störung mit der ersten Erkennung des Synchronwortes bie vorhandenem ersten Taktsignal die Abgabe von Taktimpulsen des zweiten Taktsignals ausgelöst wird, die Phasenregelschleife zwischen Phasenvergleicher und spannungsgesteuertem Oszillator geschlossen wird und die Synchronworterkennung von ersten Taktsignal auf das zweite Taktsignal umgeschaltet wird.

Durch das erfingungsgemäße Verfahren wird die Neusynchronisationszeit so weit verkürzt, daß praktisch mit dem Empfang des ersten ungestörten Synchronwortes die empfangende Telementrieeinheit bereits nachsynchronisiert wird.

Zur Überbrückung länger andauernder Störungen ist eine Weiterbildung der Erfindung zweckmäßig, bei der bei aufgetrennter Phasenregelschleife am Eingang des spannungsgesteuerten Oszillators ein Referenzsignal anliegt und damit die Frequenz des dritten Taktsignals auf einem mittleren Wert festgehalten wird.

Die Erfindung soll im folgenden anhand der Zeichnung näher erläutert werden.

In der Zeichnung zeigt

Fig. 1 das Prinzipschaltbild des für die Synchronisierung wesentlichen Teils einer Telemetrieeinheit und

Fig. 2 die detaillierte Darstellung der in der Fig. 1 als Blockschaltbild dargestellten Synchronisierstufe.

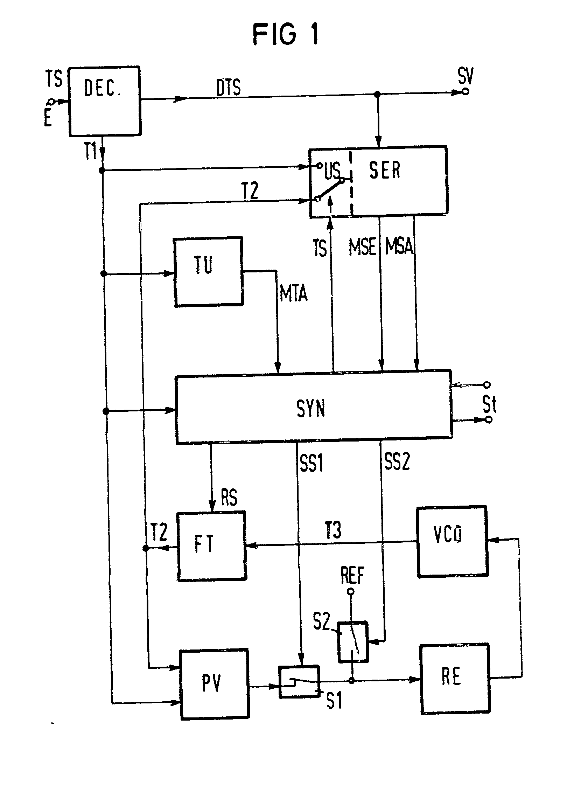

In der Fig. 1 ist mit E der Eingang für die digitalen Telemetriesignale TS bezeichnet, an ein Decoder DEC angeschlossen ist, in dem eine Umformung der Signale von dem als Übertragungscode verwendeten CDC-Code (conditional diphase code) in den einfachen Binärcode erfolgt und außerdem mittels eines auf die Taktfrequenz abgestimmten Schwingkreises ein erstes Taktsignal T1 erzeugt wird. Die decodierten Telemetriesignale DTS werden vom Ausgang des Decoders DEC an den Signaleingang einer Synchronworterkennung und Überwachung SER und weitere Anordnungen zur Signalverarbeitung SV abgegeben. Das aus den Übertragungssignalen bei der Decodierung gewonnene erste Taktsignal T1 entspricht hinsichtlich seiner Taktfrequenz bereits dem ursprünglich verwendeten Taktsignal, aufgrund von Phasenschwankungen der übertragenen Signale handelt es sich aber nicht um ein synchrones, sondern nur um ein plesiochrones Taktsignal. Dieses erste Taktsignal wird dem einen Taktsignal der Synchronworterkennung SER, einem Eingang einer Taktüberwachung TU, einem Takteingang einer Synchronisierstufe SYN und einem Eingang eines Phasenvergleichers PV zugeführt. Der Phasenvergleicher PV ist Teil einer Phasenregelschleife, bei der an den Ausgang des Phasenvergleichers über einen ersten Schalter S1 ein Regler RE, ein spannungsgesteuerter Oszillator VCO und eine Frequenzteilerstufe FT angeschlossen sind. Von der Frequenzteilerstufe FT wird ein zweites Taktsignal T2 erzeugt und einem zweiten Eingang des Phasenvergleichers PV und einem zweiten Takteingang der Synchronworterkennung SER zugeführt. Die vom Phasenvergleicher PV erzeugte Regelspannung gelangt im ungestörten Betrieb über den geschlossenen ersten Schalter S1 zum Regler RE, der im vorliegenden Falle als PI-Regler ausgebildet ist und die eigentliche Stellspannung für den spannungsgesteuerten Oszillator VCO erzeugt. Das Öffnen und das Schließen des Schalters S1 wird von der Synchronisierstufe SYN gesteuert, die über den ersten Steuersignalanschluß SS1 entsprechende Signale an den Steuereingang des ersten Schalters S1 abgibt.

Bie länger andauernden Störungen ist es zweckmäßig, den spannungsgesteuerten Oszillator VCO auf einen bestimmten Wert festzulegen. Dies geschieht mittels eines zweiten Schalters S2, durch den eine Referenzspannung REF an den Eingang des Reglers RE angelegt werden kann, der Schalter S2 wird in Abhängigkeit von Steuersignalen der Synchronisierstufe SYN geschaltet, diese Steuersignale stehen am zweiten Steuersignalanschluß SS2 an und werden von diesem dem Steuersignaleingang des zweiten Schalters S2 zugeführt. Der zweite Schalter S2 ist um umgestörten Betrieb geöffnet, die Referenzspannung kann so gewählt werden, daß sie gleichzeitig die Stellspannung für den spannungsgesteuerten Oszillator darstellt, in diesem Falle ist der zweit Schalter S2 an die Verbindung zwischen Regler RE und spannungsgesteuertem Oszillator VCO angeschlossen.

Der spannungsgesteuerte Oszillator erzeugt ein drittes Taktsignal T3, dessen Frequenz ein Vielfaches der Taktfrequenz der Telemetriesignale ist. Durch den Frequenzteiler FT wird aufgrund des eingestellten Teilerverhältnisses das zweite Taktsignal T2 erzeugt, das nach Frequenz und Phase dem ursprünglichen Taktsignal für die Telemetriesignale entspricht.

Die Taktüberwachung TU erzeugt bei Ausfall des ersten Taktsignals T1 eine Meldung-Taktausfall MTA, die einem Eingang der Synchronisierstufe zugeführt wird. Entsprechend erzeugt die Synchronworterkennungs- und Überwachung SER bei richtig erkanntem Synchronwort eine Meldung MSE und eine Meldung MSA bei Synchronwortausfall, beide Meldesignale werden an entsprechende Eingänge der Synchronisierstufe SYN abgegeben. Von der Synchronisierstufe wird ein Signal TS zur Taktabschaltung an die Synchronworterkennung- und Überwachung abgegeben, durch die der innere Takteingang mittels eines Umschalters US bei einer Störung vom Anschluß für das erste Taktsignal T1 umge schaltet wird. Die Synchronisierstufe SYN ist außerdem mit einer zusätzlichen Steuerung St verbunden, durch die beispielsweise manuell bestimmte Steuersignale angelegt werden können. Der Takteingang der Synchronisierstufe SYN ist an den Decoderanschluß für das erste Taktsignal T1 angeschlossen, ein Rücksetzanschluß RS des Frequenzteilers FT ist mit einem entsprechenden Steuerausgang der Synchronisierstufe SYN verbunden.

Im ungestörten Betrieb erzeugt die Phasenregelschleife ein zum ursprünglichen Sendetakt synchrones Taktsignal T2, die eingehenden digitalen Signale werden synchron detektiert, die Taktüberwachung meldet an die Synchronisierstufe, daß kein Taktausfall vorliegt und die Synchronworterkennung SER meldet, daß die Synchronworte erkannt werden.

Im Störungsfall meldet die Taktüberwachung TU Taktausfall und/oder die Synchronworterkennung SER Synchronwortausfall. Durch ein entsprechendes Steuersignal der Synchronisierstufe SYN wird der erste Schalter S1 ausgeschaltet und der zweite Schalter S2 ingeschaltet, außerdem wird über die Taktumschaltung TS der Umschalter US in der Synchronworterkennung SER von Anschluß für das zweite Taktsignal T2 auf den Anschluß für das erste Taktsignal T1 umgeschaltet. Dadurch wird sichergestellt, daß nach dem Auftreten des ersten Taktsignals T1 das erste Synchronwort auf jeden Wahl detektiert bzw. erkannt werden kann, unabhängig von der momentanen Phase und Frequenz des örtlich erzeugten zweiten Taktsignals T2. Bei Beendigung der Störung, also beim Auftreten des ersten Taktsignals T1, gibt die Taktüberwachung TU kein Taktausfall an die Synchronisierstufe SYN, außerdem wird mittels dieses Taktsignals T1 das erste Synchronwort in der Synchronworterkennung SER detektiert.

Bei Empfang dieser Meldungen gibt die Synchronisierstufe SYN Steuersignale an den ersten und den zweiten Schalter und außerdem gleichzeitig einen Rücksetzimpuls an den Rücksetzeingang RS des Frequenzteilers FT ab. Durch den kurzzeitigen Rücksetzbefehl an den Frequenzteiler FT ist in diesem Augenblick der durch Frequenzteilung erzeugte Oszillatortakt T3 in Phase mit dem momentanen plesiochronen ersten Taktsignal T1. Von diesem Zeitpunkt an hat die Phasenregelschleife nur noch die Aufgabe, den Jitter des ersten Taktsignals T1 auszuregeln. Da zusammen mit dem Rüchsetzbefehl RS von der Synchronisierstufe auch ein Steuersignal TS zur Taktumschaltung an den Umschlater Us der Synchronworterkennung SER abgegeben wird, ist von diesem Zeitpunkt an auch die Synchronworterkennung in Phase mit den empfangenen digitalen Telemetriesignalen.

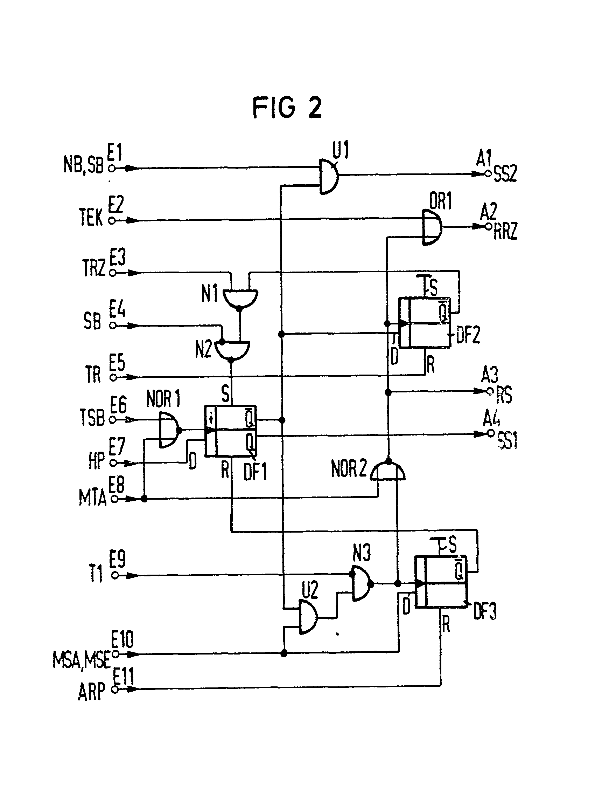

Beim Rücksetzen des Frequenzteilers FT kann ein Phasenfehler im zweiten Taktsignal T2 auftreten, der maximal dem zeitlichen Abstand zwischen zwei Impulsen des dritten Taktsignals T3 entspricht. Aus diesem Grunde wurde die Frequenz des dritten Taktsignals T3 als ein Vielfaches der benötigten Taktfrequenz gewählt, da der auftretende relative Phasenfehler dem reziproken Teilerverhältnis des Frequenzteilers FT entspricht. Dieser Fehler kann damit so klein gehalten werden, daß er gegenüber dem Auftreten des Jitter zu vernachlässigen ist. Nach dem Umschalten klingen die Phasenabweichungen des zweiten Taktsignals entsprechend der Regelbandbreite der Phasenregelschleife innerhalb eines vergleichsweise kurzen Zeitraumes ab. Es ergibt sich also eine Regelung, bei der der Regelkreis stets im linearen Bereich bleibt und eine kurze Ansprechzeit aufweist. In der Fig. 2 ist im Detail die in der Fig. 1 bereits gezeigte Synchronisierstufe SYN dargestellt, die links eine Reihe von Eingängen zur Aufnahme von Meldesignalen und rechts eine Reihe von Ausgängen zur Abgabe von Steuersignalen enthält. Die Synchronisierstufe SYN enthält einen ersten Eingangs E1, an dem von der Telegrammauswertung der Telemetrieeinheit gesteuert, ein unterschiedlicher Logikpegel anliegt, je nachdem, ob sich die Telemtrieeinheit im Normalbetrieb NB oder im Starterbetrieb SB befindet. Im letzteren Fall ist als im Signalweg vor dieser Telemetrieeinheit eine Störung aufgetreten, die den Empfang von Telegrammen verhindert. Mit diesem ersten Eingang E1 ist der erste Eingang eines ersten UND-Gatters U1 verbunden, dessen Ausgang den ersten Ausgang A1 der Synchronisierstufe darstellt, an dem ein Steuersignal SS2 zur Steuerung des zweiten Schalters S2 abgegeben werden kann. Der zweite Eingang E2 der synchronisierstufe ist mit einer Telegrammerkenneinrichtung der Telemetrieeinheit verbunden und erhält von dieser ein Signal, sobald das erste Telegramm einer Telegrammkette erkannt ist. Mit diesem Eingang E2 ist der eine Eingang eines ersten ODER-Gatters OR1 verbunden, dessen Ausganganschluß den zweiten Ausgang A2 der Synchronisierstufe darstellt, von dem an den Rahmenzähler der Telemetrieeinheit ein Rückssetzbefehl RRZ abgegeben werden kann. Bei abgelaufenen Rahmenzähler gibt dieser ein Signal TRZ an den dritten Eingang E3 der Synchronisierstufe ab, das zum einen Eingang eines ersten NAND-Gatters N1 gelangt. Der Ausgang dieses Gatters ist mit dem nichtinvertierenden Eingang eines zweiten NAND-Gatters N2 verbunden, dessen invertierender Eingang an den vierten Eingang E4 der Synchronisierstufe SYN angeschlossen ist. Dieser Eingang liegt auf einem festen Potential, sofern die zugehörige Telemetrieeinheit im Starterbetrieb SB läuft, also das erste Telegramm einer Telegrammkette erzeugt. Mit dem Ausgang des zweiten NAND-Gatters NAND2 ist der Setzeingang eines ersten D-Flipflops DF1 verbunden, das bei negativer Taktflanke umschaltet und dessen D-Eingang mit einem auf logischem Eins-Pegel HP liegenden siebten Eingang E7 der Synchronisierstufe SYN verbunden ist.

Nack Ablauf der Wartezeit wird von dem in der Telemetrieeinheit enthaltenen Wartezeitzähler ein entsprechendes Signal TSB an den sechsten Eingang E6 der Synchronisierstufe abgegeben, der mit einem Eingang eines ersten NOR-Gatters NOR1 verbunden ist. Von der Taktüberwachung TU wird das erste Taktsignal T1 überwacht und bei dessen Ausfall eine Meldung-Taktausfall MTA erzeugt und über den achten Eingang E8 der Synchronisierstufe an den zweiten Eingang des ersten NOR-Gatters NOR1 und an den ersten Eingang des zweiten NOR-Gatters NOR2 abgegeben. Der Ausgang des ersten NOR-Gatters NOR1 ist mit dem Takteingang des ersten D-Flipflops DF1 verbunden, an dessen invertierenden Ausgang $\bar{Q}$ der D-Eingang eines zweiten D-Flipflops DF2, der zweite Eingang des ersten UND-Gatters U1 und der erste Eingang des zweiten UND-Gatters U2 angeschlossen sind. Über den neunten Eingang E9 der Synchronisierstufe wird das erste Taktsignal T1 aufgenommen und zum invertierenden Eingang eines dritten NAND-Gatters N3 geleitet. Der nichtinvertierende Eingang dieses Gatters ist mit dem Ausgang des zweiten UND-Gatters U2 verbunden, während der Ausgang des dritten NAND-Gatters N3 mit dem zweiten Eingang des zweiten NOR-Gatters NOR2 und mit dem bei der positiven Flanke schaltenden Takteingang eines dritten D-Flipflops DF3 verbunden ist. Mit dem zehnten Eingang E10 der Synchronisierstufe ist ein Ausgang der Synchronworterkennung- und Überwachung SER verbunden, an dem die Meldung MSA über Synchronwortausfall bzw. MSE für Synchronwort- erkannt ansteht. Diese Meldungen werden an den zweiten Eingang des zweiten UND-Gatters U2 und an den D-Eingang des dritten D-Flipflops DF3 weitergeleitet. Schließlich ist für Testzwecke und für die allgemeine Rücksetzung beispielsweise nach Betriebsspannungsausfall von elfter Eingang E11 der Synchronisierstufe vorgesehen, von dem ein allgemeiner Rücksetzpuls ARP zum Rücksetzeingang R des dritten D-Flipflops DF3 gelangt Der Setzeingang S dieses D-Flipflops ist mit Bezugspotential verbunden, während an den invertierenden Ausgang $\bar{Q}$ der Rücksetzeingang R des ersten D-Flipflops DF1 angeschlossen ist. Der nichtinvertierende Ausgang Q stellt den vierten Ausgangsanschluß A4 der Synchronisierstufe dar, an dem ein Steuersignal SS1 zur Steuerung des ersten Schalters S1 ansteht. Mit dem Ausgang des zweiten NOR-Gatters NOR2 ist ein dritter Ausgang A3 der Synchronisierstufe verbunden, an dem der Rücksetzimpuls RS für den Frequenzteiler FT erscheint, außerdem ist dieser Ausgang mit dem zweiten Eingang des ersten ODER-Gatters OR1 und mit dem Takteingang des zweiten D-Flipflops DF2 verbunden, wobei dieser Takteingang des zweiten D-Flipflops DF2 verbunden, wobei dieser Takteingang des Flipflops bei der positiven Taktflanke umschaltet. Der Setzeingang dieses Flipflops ist mit Bezugspotential verbunden, während des Rücksetzeingang an den fünften Eingang E5 der Synchronisierstufe angeschlossen ist und von der Rahmenerkennung der Telemetrieeinheit bei erkanntem Telegrammrahmen ein entsprechendes Signal TR empfängt. Der invertierende Ausgang $\bar{Q}$ des zweiten D-Flipflops schließlich ist mit dem zweiten Eingang des ersten NAND-Gatters N1 verbunden.

Durch die Verknüpfung der verschiedenen Steuerbefehle in der Synchronisierstufe wird die Synchronisierung des Taktoszillators im Störungsfalle blockiert und nach Beendigung der Störung eine bitschnelle Anfangssynchronisation gesteuert und sichergestellt, daß bei einer Fehlsynchronisation diese bitschnelle Anfangssynchronisation wiederholt wird.

## Patentansprüche

1. Verfahren zur Synchronisation von Taktgeneratoren bei der Übertragung digitaler Signale, die eine Taktinformation und periodisch wenigstens ein Synchronwort enthalten, bei dem aus den digitalen Signalen ein erstes, gegenüber diesen Signalen phasenstarres Taktsignal und daraus mittels einer, einen Phasenvergleicher und einen damit verbundenen spannungsgesteuerten Oszillator enthaltenden Phasenregelschleife eine zweites Taktsignal erzeugt wird und bei dem die Erzeugung des ersten Taktsignals und der Empfang des Synchronwortes überwacht werden, dadurch gekennzeichnet, daß in der Phasenregelschleife ein drittes Taktsignal (T3) mit einer Frequenz entsprechend einem Vielfachen der Taktfrequenz der digitalen Signale (TS) erzeugt wird, daß aus dem dritten Taktsignal (T3) durch Frequenzteilung das zweite Taktsignal (T2) gebildet wird und dieses die Erkennung des Synchronwortes steuert, daß bei einer Störung, die zu einem Ausfall des ersten Taktsignals (T1) und/oder des Synchronwortes führt, die Phasenregelschleife zwischen Phasenvergleicher (PV) und spannungsgesteuertem Oszillator (VCO) aufgetrennt wird und die Steuerung der Synchronworterkennung vom zweiten Taktsignal (T2) auf das ersten Taktsignal (T1) umgeschaltet wird, daß nach Beseitigung der Störung mit der ersten Erkennung des Synchronwortes bei vorhandenem ersten Taktsignal die Abgabe von Taktimpulsen des zweiten Taktsignals (T2) ausgelöst wird, die Phasenregelschleife zwischen Phasenvergleicher (PV) und spannungsgesteuertem Oszillator (VCO) geschlossen wird und die Synchronworterkennung vom ersten Taktsignal (T1) auf das zweiten Taktsignal (T2) umgeschaltet wird.

2. Verfahren nach Patentanspruch 1, dadurch gekennzeichnet, daß bei aufgetrennter Phasenregelschleife am Eingang des spannungs gesteuerten Oszillators (VCO) ein Referenzsignal anliegt und damit die Frequenz des dritten Taktsignals (T3) auf einem mittleren Wert festgehalten wird.

## Revendications

1. Procéde pour synchroniser des générateurs de cadence lors de la transmission de signaux numériques qui contiennent une information de cadence et, périodiquement, au moins un mot de synchronisation, et selon lequel à partir des signaux numériques est produit un premier signal de cadence possédant une phase rigide par rapport à ces signaux, et à partir de ce signal est produit un second signal de cadence au moyen d'une boucle de régulation de phase contenant un comparateur de phase et un oscillateur commandé par la tension, qui est relié à ce comparateur de phase, et selon lequel on contrôle la production du premier signal de cadence et la réception du mot de synchronisation, caractérisé par le fait que dans la boucle de régulation de phase, un troisième signal de cadence (T3) possédant une fréquence correspondant à un multiple de la fréquence de la cadence des signaux numériques (TS) est produit, que le second signal de cadence (T2) est formé par division de la fréquence, à partir du troisième signal de cadence (T3) et commande l'identification du mot de synchronisation, que dans le cas d'une perturbation conduisant à une suppression du premier signal de cadence (T1) et/ou du mot de synchronisation, la boucle de régulation de phase est interrompue entre un comparateur de phase (PV) et l'oscillateur (VCO) commandé par la tension, et que la commade de l'identification du mot de synchronisation est commutée depuis le second signal de cadence (T2) sur le premier signal de cadence (T1), qu'après élimination de la perturbation, la délivrance d'impulsions de cadence du second signal de cadence (T2) est déclenchée lors de la première identification du mot de synchronisation, lorsque le premier signal de cadence est présent, la boucle de régulation de phase est fermée entre le comparateur de phase (PV) et l'oscillateur (VCO) commandé par la tension, et l'identification du mot de synchronisation est commutée depuis le premier signal de cadence (T1) sur le second signal de cadence (T2).

2. Procédé suivant la revendication 1, caractérisé par le fait que, lorsque la boucle de régulation de phase est interrompue, un signal de référence est appliqué à l'entrée de l'oscillateur (VCO) commandé par la tension et, par conséquent, la fréquence du troisième signal de cadence (T3) est maintenue à une valeur moyenne.

## Claims

1. Method for the synchronization of clock generators in the transmission of digital signals which contain clock information and periodically at least one synchronization word, in which, from the digital signals, a first clock signal phaselocked relative to these signals is generated, and from which, by means of a phase-control loop containing a phase comparator and a voltage-controlled oscillator connected to the latter, a second clock signal is generated and in which the generation of the first clock signal and the reception of the synchronization word are monitored, characterized in that in the phase-control loop, a third clock signal (T3) having a frequency corresponding to a multiple of the clock frequency of the digital signals (TS) is generated, in that, from the third clock signal (T3), the second clock signal (T2) is formed by frequency division and said second clock signal controls the detection of the synchronization word, in that, in the case of a fault which leads to a failure of the first clock signal (T1) and/or of the synchronization word, the phase-control loop is disconnected between the phase comparator (PV) and voltage-controlled oscillator (VCO) and the control of the synchronization word detection is switched over from the second clock signal (T2) to the first signal (T1), in that, after elimination of the fault, the emission of clock pulses of the second clock signal (T2) is triggered with the first detection of the synchronization word when the first clock signal is present, the phase-control loop between the phase comparator (PV) and voltage-controlled oscillator (VCO) is closed and the synchronization word detection is switched over from the first clock signal (T1) to the second clock signal (T2).

2. Method according to Claim 1, characterized in that, with the phase-control loop disconnected, a reference signal is present at the input of the voltage-controlled oscillator (VCO) and thus the frequency of the third clock signal (T3) is kept at an average value.

# FIG 1

EP 0 121 805 B1

# FIG 2